# DEMANDE DE BREVET EUROPEEN

(11) **EP 1 997 648 A1**
(43) Date de publication de la demande: **03.12.2008**
(21) Numéro de dépôt: 08104073.5
(22) Date de dépôt: 23.05.2008
(51) Int. Cl.: B60B 21/12, B60C 29/02

(54) **Dispositif pour roues "tubeless"**

(30) Priorité: 31.05.2007 BE 200700270
(71) Demandeur: Rigida International BV, 5831 AC Boxmeer (NL)
(72) Inventeur: Deguise, Patrick, 60400 PONT L'EVEQUE (FR)
(74) Mandataire: Leherte, Georges M.L.M.

(57) **Abrégé**

L'invention concerne un dispositif pour roues de bicyclettes "tubeless" impliquant un flap (2) muni d'une valve intégrée comprenant un support de valve (3) moulé dans la masse du flap (2) destiné à la mise en place d'un corps de valve (4) amovible.

## Description

L'invention concerne un nouveau concept s'appliquant aux jantes "Tubeless" (pneus sans chambre à air), notamment les jantes "Tubeless" pour bicyclettes.

Le principe de jantes "Tubeless" pour bicyclettes (et plus généralement pour véhicules à une, deux, trois ou quatre "roues à rayons" n'est pas nouveau en soi. Le problème particulier de ce type de roues pour l'application tubeless est l'étanchéité au niveau des trous de fixation des rayons.
Il a notamment été proposé d'utiliser une bande (ou "fond de jante", également désigné par le terme de "flap") en matière élastique, tel que du caoutchouc, pour assurer l'étanchéité du creux de la jante ou se trouvent fixés les rayons. C'est par exemple le cas des brevets EP 0 615 865 (et le concept Nadal / Nagesti) et FR 2 847 202 (et le concept Mavic).

Un aspect qui continue à poser problème dans ce contexte est cependant la mise en place de la valve de gonflement du pneu, plus particulièrement en ce qui concerne sa fixation sur le flap et/ou la roue, et son étanchéité par rapport au flap et la roue.
Selon le concept Nadal / Nagesti la valve (plus spécifiquement une valve de type "Schrader") est plus particulièrement moulée dans le flap, tandis que selon le concept Mavic la valve (en général de type "Schrader" mais également de type "Presta" ou "Dunlop") est plus particulièrement rapportée par vissage ou "clipsage"
Le concept Nadal assure une bonne étanchéité mais son principal inconvénient réside dans le fait qu'une défectuosité de la valve (soupape) implique le remplacement de l'intégralité du flap.
Le concept Mavic, par contre, permet le remplacement / changement de la valve, mais le clipsage / vissage ne permet pas une étanchéité optimale et durable.
Les valves de type "Presta", dite "petites valves" ou "Dunlop" ont typiquement un diamètre de 6mm et sont plutôt utilisées pour les vélos de ville et pour la course, tandis que valves de type "Schrader", dites "grosses valves" ont typiquement un diamètre de 8mm et sont plutôt utilisées pour les vélos de type VTT (bien qu'il existe aussi des chambres à air pour VTT équipées de petites valves).

L'invention a pour objectif de remédier aux principaux inconvénients des flaps tubeless connus, tout en permettant une flexibilité optimale dans le choix du type de valve et la possibilité de remplacement de celle-ci.

Pour ce faire l'invention prévoit un dispositif pour roues de bicyclettes a pneus "tubeless" comprenant un flap à valve intégrée, moulée dans la masse du flap, dont le flap comprend un support de valve moulé dans la masse permettant la mise en place d'un corps de valve pour le gonflage et le maintien en pression du pneu.

Selon un premier mode de réalisation préféré de l'invention le dispositif peut notamment comprendre un corps de valve de type "Schrader", vissé dans ledit support de valve.

Selon un autre mode de réalisation préféré de l'invention le dispositif peut notamment comprendre un corps de valve de type "Presta", vissé dans ledit support de valve.

Selon encore un autre mode de réalisation préféré de l'invention le dispositif peut comprendre un support de valve prévu pour permettre la mise en place, par vissage d'un corps de valve / une valve de type "Schrader" et pour permettant le passage d'une valve de type "Presta".

Le nouveau concept selon l'invention implique donc un support de valve intégré, moulé dans le flap, désigné ici comme flap V.I.S. ou "VALVE INTEGRAL SYSTEM".

Contrairement aux systèmes existants par valve rapportée par vissage sur le fond de jante, le système selon l'invention permet d'assurer une étanchéité parfaite et durable au niveau de la valve.
Le dispositif selon l'invention permet également, de par sa conception, de glisser une valve de type Presta dans son support après avoir dévissé manuellement le corps d'une valve Schrader dont le support de valve serait équipé.
Concrètement, cela veut dire que sans endommager le flap, l'utilisateur peut utiliser une chambre à air en valve Presta en cas de nécessité.
Pour faciliter la manipulation du corps de valve, une partie de celui-ci peut être muni de stries ou de petites rainures ("moleté") .

Le concept selon l'invention peut s'appliquer sur toutes les jantes à rayonnage traditionnel en double voire triple paroi à l'aide d'un flap adapté à la géométrie de la jante.

Le concept selon l'invention repose ainsi sur deux éléments, à savoir :
- un élément appelé "Support de valve". La réalisation de ce support de valve, qui est moulé dans la matière, évite toute rotation du support de valve dans la matière moulée. A cet effet le support de valve peut, notamment et de préférence, être doté d'un ou plusieurs joints afin d'assurer une étanchéité parfaite entre la matière du flap et le support de valve. Ces joints toriques assurent l'étanchéité sur le fut du support de valve. Le support de valve est en outre, de préférence, prévu de manière telle que sa forme géométrique et son état de surface, permettent une bonne accroche du support de valve dans la matière du flap (tel que notamment divers types de caoutchouc synthétiques ou de polyéthylènes, en particulier du polyéthylène souple, permettant la réalisation de flaps plus légers, plus fins et plus raides, et de meilleure résistance que les flaps actuellement sur le marché, généralement réalisés en caoutchouc).
- un élément appelé "Corps de valve" qui vient se visser sur l'extrémité du support pour permettre le gonflage et le maintien en pression. Un joint torique en fond de support en garantie son étanchéité.
Le concept Rigida fait ainsi appel à un flap muni d'une valve moulée mais transformable sans le démonter en cas de détérioration importante du pneu. Cela permet l'introduction d'une chambre à air dotée d'une petite valve pour une réparation rapide sur un pneu assez endommagé.

D'autres détails et particularités de l'invention apparaitront de la description d'un mode de réalisation préféré de l'invention, donné ci-après, à titre d'exemple illustratif, en ayant référence aux dessins annexés, dans lesquels
la figure 1 montre, en coupe, au niveau de la valve, un dispositif ("flap") selon l'invention, placé sur une jante, avec son support de valve moulé et son corps de valve;
la figure 2 montre un support de valve selon la figure 1;
la figure 3 montre un corps de valve selon la figure 1; et
la figure 4 montre le dispositif de la figure 1 dont le corps de valve à été retiré et dans lequel a été introduit la valve "Presta" d'une chambre à air.

Le dispositif selon l'invention (désigné par la référence 1), pour roues de bicyclettes a pneus "tubeless", est constitué d'un "flap" (désigné par la référence 2) comprenant une valve intégrée constituée d'un support de valve (3) moulé dans la masse du flap (2), et un corps de valve (4) pour le gonflage et le maintien en pression du pneu.

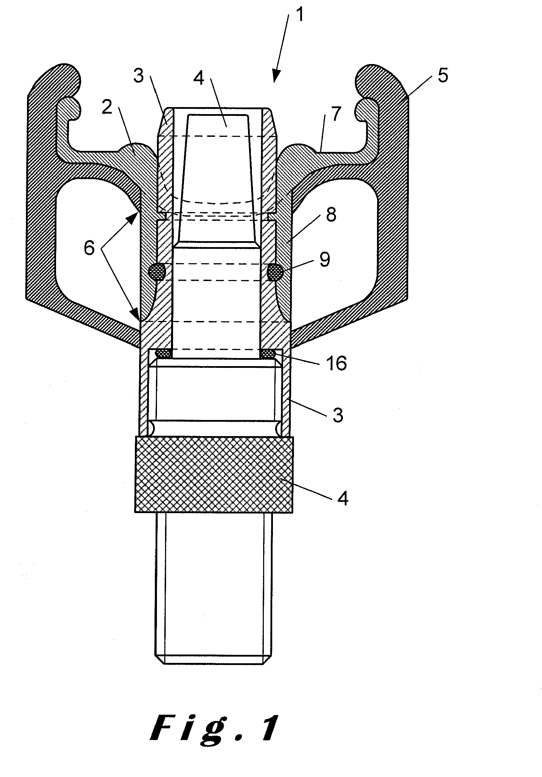

La figure 1 montre le flap (2) placé sur une jante de roue en profil d'aluminium (5), avec le support de valve (3) et le corps de valve (4) introduits au travers d'un orifice ad hoc (6) dans la jante (5).
Le flap (2) se présente comme une bande (7) continue (circulaire), destinée à former un fond de jante assurant l'étanchéité, en matière synthétique semi-souple (tel qu'un polyéthylène "souple"), moulée d'une pièce, avec le support de valve (3) intégré dans une moulure (8) s'appliquant parfaitement autour du support de valve (3).

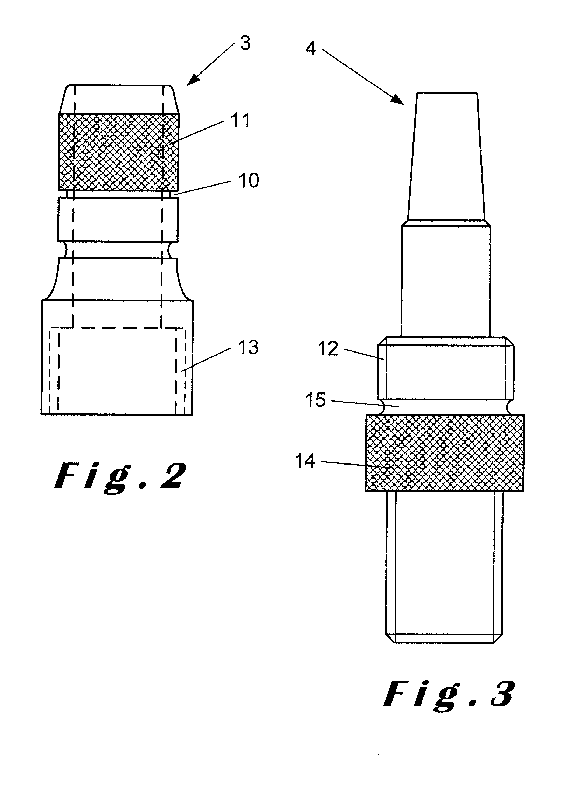

Pour assurer un parfait maintien et une parfaite étanchéité de la valve le support de valve est doté d'un joint torique (9) -ou plusieurs joints-, et d'une forme géométrique / d'un état de surface permettent une accroche optimale, tel que des rainure(s) (10) et zone(s) "moletée(s)" (11), comme cela apparait plus clairement sur la figure 3 montrant le support de valve (3) séparément.
Le corps de valve (4), montré séparément sur la figure 3, comprend, d'une part, une zone (12) avec filet permettant de viser le corps de valve dans un filet (13) intérieur, correspondant, du support de valve (3), et 'd'autre part, une zone moletée (14) facilitant la manipulation du corps de valve (4) ainsi qu'une gorge (15) de dégagement du filet entre la zone filetée (12) et la zone moletée (14).
Un joint torique (16) prévu entre le corps de valve (4) et le support de valve (3) assure l'étanchéité de la valve.

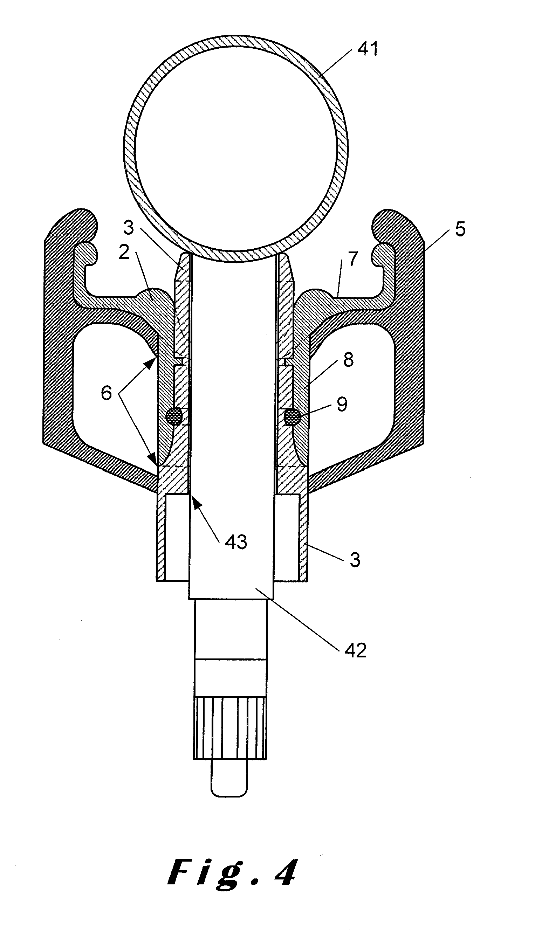

Comme illustré à la figure 4, le dispositif selon l'invention (1) pour pneu tubeless, permet un dépannage aisé, en cas de crevaison du pneu tubeless (non représenté), en dévissant simplement le corps de valve (4) et en mettant en place une chambre à air classique (à petite valve "presta"), désignée par la référence 41, dont la valve (42) est introduite dans le fût (43) du support de valve (3).
Il s'agit là d'un avantage important de l'invention, car en cas de détérioration du pneu ce concept (le concept "V.I.S" mentionné plus haut) permet un dépannage avec une chambre à air (petite valve).

## Revendications

1. Dispositif pour roues de bicyclettes a pneus "tubeless" comprenant un flap (2) à valve intégrée, moulée dans la masse du flap, **caractérisé en ce que** le flap (2) comprend un support de valve (3) moulé dans la masse du flap, permettant la mise en place d'un corps de valve (4) pour le gonflage et le maintien en pression du pneu.

2. Dispositif selon la revendication 1, **caractérisé en ce qu'il** comprend un corps de valve (4) vissé dans ledit support de valve (3).

3. Dispositif selon la revendication 2, **caractérisé en ce qu'il** comprend un corps de valve de type "Schrader" vissé dans ledit support de valve.

4. Dispositif selon la revendication 2, **caractérisé en ce qu'il** comprend un corps de valve de type "Presta" vissé dans ledit support de valve.

5. Dispositif selon la revendication 1, **caractérisé en ce que** le flap comprend un support de valve permettant la mise en place, par vissage d'un corps de valve de type "Schrader" et permettant le passage d'une valve de type "Presta".
